# EUROPÄISCHE PATENTANMELDUNG

(11) **EP 1 400 401 A2**
(43) Veröffentlichungstag der Anmeldung: **24.03.2004**
(21) Anmeldenummer: 03021454.8
(22) Anmeldetag: 23.09.2003
(51) Int. Cl.: B60N 2/46

(54) **Auf einem Träger abgestützter Deckel**

(30) Priorität: 23.09.2002 DE 20214711 U
(71) Anmelder: Seeber AG & Co. KG, 68165 Mannheim (DE)
(72) Erfinder: Maierholzner, Thomas, 84137 Vilsbiburg (DE)
(74) Vertreter: Prünte, Peter, Dipl.-Phys.

(57) **Zusammenfassung**

Ein insbesondere schwenkbar auf einem Träger (30) gelagerter Deckel (1) ist gekennzeichnet durch ein Trägerteil (3) und eine Abdeckung (2), die in einer ersten Raumrichtung gegen einander verschiebbar sind und in den anderen Raumrichtungen formschlüssig mit einander verbunden sind, wobei das Trägerteil (3) und die Abdeckung (2) durch eine in Richtung einer der beiden anderen Raumrichtungen wirkende Kraft in wenigstens einer Verschiebeposition zu einander festsetzbar sind.

## Beschreibung

Die Erfindung bezieht sich auf einen auf einem Träger abgestützten Deckel, insbesondere einen schwenkbar auf dem Träger gelagerten Deckel.

Aus dem Stand der Technik sind Armlehnen für Fahrzeuge bekannt, die gegenüber einem Träger verstellbar, beispielsweise höhenverstellbar, sind. Eine derartige Armlehne ist aus der DE 198 12 432 C2 bekannt. Zur Höhenverstellung dient eine Kulissenführung. Zusätzlich ist die Armlehne verschwenkbar gelagert.

Es ist die Aufgabe der Erfindung, einen vielseitig einsetzbaren Deckel zu schaffen. Bei einem Deckel der eingangs genannten Art wird diese Aufgabe gelöst durch ein Trägerteil und eine Abdeckung, die in einer ersten Raumrichtung gegen einander verschiebbar sind und in den anderen Raumrichtungen formschlüssig mit einander verbunden sind, wobei das Trägerteil und die Abdeckung durch eine in Richtung einer der beiden anderen Raumrichtungen wirkende Kraft in wenigstens einer Verschiebeposition zu einander festsetzbar sind.

Der erfindungsgemäße Deckel lässt sich insbesondere als Armlehne in einem Fahrzeug, beispielsweise als Armlehne der Mittelkonsole, einsetzen. In diesem Fall ist die Armlehne bevorzugt in Fahrtrichtung des Fahrzeugs verschiebbar gelagert. Zusätzlich kann der Deckel, also in diesem Fall die Armlehne, auch noch um eine waagrechte Achse quer zur Fahrtrichtung geschwenkt werden. Die Armlehne lässt sich solange verschieben, wie nicht eine zusätzlich zum Gewicht der Abdeckung des Deckels auf diesen von oben wirkende Kraft auf den Deckel einwirkt. Wenn eine zusätzliche Kraft aufgebracht wird, etwa durch einen sich auf der Armlehne abstützenden Arm, wird die Abdeckung gegenüber dem Trägerteil festgesetzt. Dadurch wird verhindert, dass in unerwünschter Weise der sich abstützende Arm verschoben wird.

Vorteilhafte Weiterbildungen der Erfindung ergeben sich aus den Unteransprüchen und aus der Beschreibung.

Besonders geeignet ist ein Deckel, an dem das Trägerteil und die Abdeckung in jeder Verschiebeposition zu einander festsetzbar sind. Insbesondere beim Einsatz des Deckels als Armlehne sind dadurch alle Positionen zum Ausruhen des Arms möglich.

In einer geeigneten Ausbildung des Deckels ist vorgesehen, dass das Trägerteil und der Deckel in einem unbelasteten Zustand durch ein mit dem Trägerteil oder mit der Abdeckung verbundenes elastisches Element von einander abgehoben sind und im belasteten Zustand durch Zusammendrücken des elastischen Elements gegen einander gedrückt sind. Das elastische Element gewährleistet somit, dass nur im Bereich des elastischen Elements Gleitreibung oder Rollreibung besteht. Sofern das elastische Element im Kontaktbereich zwischen dem Trägerteil und der Abdeckung eine Rolle, ein Rädchen oder eine drehbar gelagerte Kugel aufweist, ist Rollreibung vorhanden.

Mit Vorteil ist das elastische Element von Druckfedern gebildet, die an einem auf dem Trägerteil aufgebrachten Schiebeschlitten angebracht sind. Die Druckfedern haben eine Federkraft, die größer ist als die Gewichtskraft der Abdeckung.

Vorzugsweise sind die Druckfedern in dem Schiebeschlitten in Sacklochbohrungen gelagert.

Um zu gewährleisten, dass eine möglichst geringe Reibung zwischen der Abdekkung und dem Trägerteil des Deckels besteht, sind die Druckfedern auf ihrer mit der Abdeckung zusammenwirkenden Seite jeweils von einer Kappe abgedeckt.

In einer vorteilhaften Ausbildung weist der Deckel einen eine hohe Haftreibung gegenüber einer benachbarten Oberfläche ausübenden Streifen, insbesondere einen Gummistreifen, auf. Der Streifen ist entweder an dem Trägerteil, insbesondere an dem Schiebeschlitten, oder an der Abdeckung oder sowohl an dem Trägerteil als auch an der Abdeckung angeordnet.

Ebenfalls von Vorteil ist es, wenn der Streifen eine Verzahnung oder eine Riffelung aufweist. Insbesondere dann, wenn zwei auf dem Trägerteil bzw. auf der Abdeckung angebrachte Streifen einander gegenüberliegen, die beide jeweils eine Verzahnung oder eine Riffelung aufweisen, oder wenn die gegenüber liegende Fläche eine Verzahnung oder eine Riffelung aufweist, wird dadurch eine hohe Haltekraft ausgeübt, wenn bei Aufliegen eines Arms oder eines Gegenstands die Abdeckung gegen das Trägerteil gedrückt wird.

Zur Erzeugung einer hohen Verzögerung bei Schiebebewegungen des Deckels kommt mit Vorteil eine Bremse, insbesondere eine Silikonbremse, zum Einsatz, die zwischen dem Trägerteil und der Abdeckung eingebracht ist.

In einer Ausgestaltung der Erfindung ist die Bremse an dem Schiebeschlitten befestigt und weist einen Zahnkranz auf, der mit einer Längsverzahnung in einer in der Abdeckung angeordneten Nut kämmt.

Nachstehend wird die Erfindung in Ausführungsbeispielen anhand der Zeichnungen näher erläutert. Diese zeigen:
- Fig. 1: eine perspektivische Ansicht eines Trägers und eines über ein Scharnier an diesem angelenkten Trägerteil eines Deckels mit einem Schiebeschlitten,
- Fig. 2: eine perspektivische Ansicht der Abdeckung des Deckels zusammen mit dem Schiebeschlitten,
- Fig. 3: eine perspektivische Ansicht der Abdeckung ohne den Schiebeschlitten,
- Fig. 4: eine Schnittansicht entlang einer Linie IV - IV in Fig. 2.

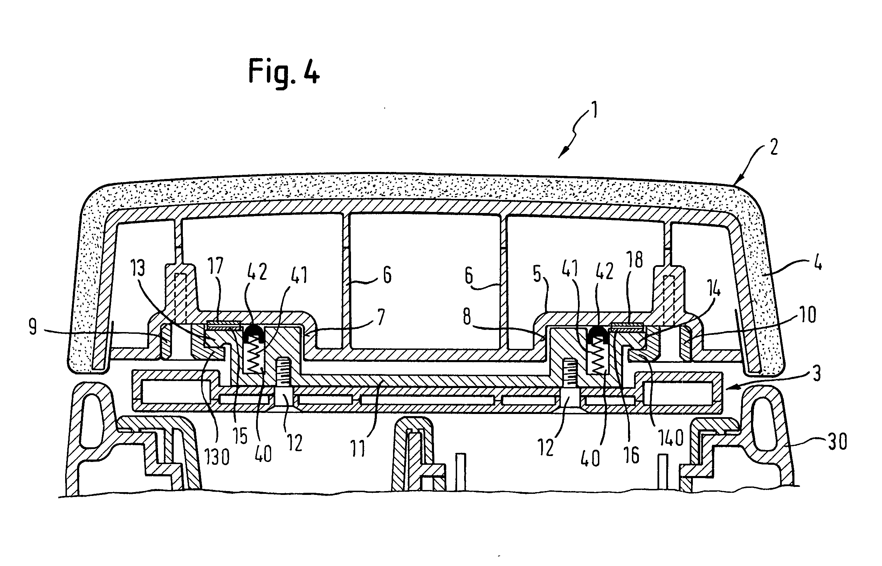

Eine Armlehne für eine Mittelkonsole eines Kraftfahrzeugs weist einen Deckel 1 (Fig. 4) auf. Der Deckel 1 umfasst eine Abdeckung 2 und ein Trägerteil 3. Die Abdeckung 2 umfasst ein Außenteil 4 und ein Innenteil 5, das von dem Außenteil 4 auf seiner Oberseite und an den Seitenkanten abgedeckt wird. Ein zwischen dem Außenteil 4 und dem Innenteil 5 befindlicher Hohlraum nimmt Verstärkungswände 6 oder -rippen auf.

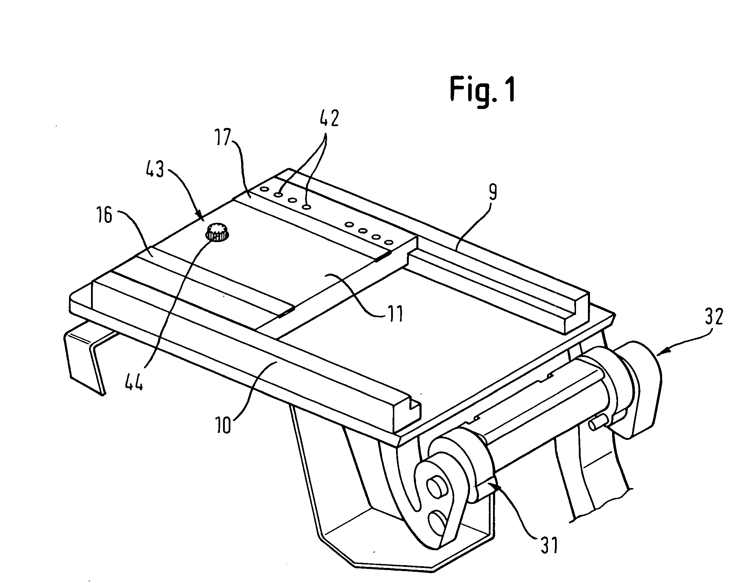

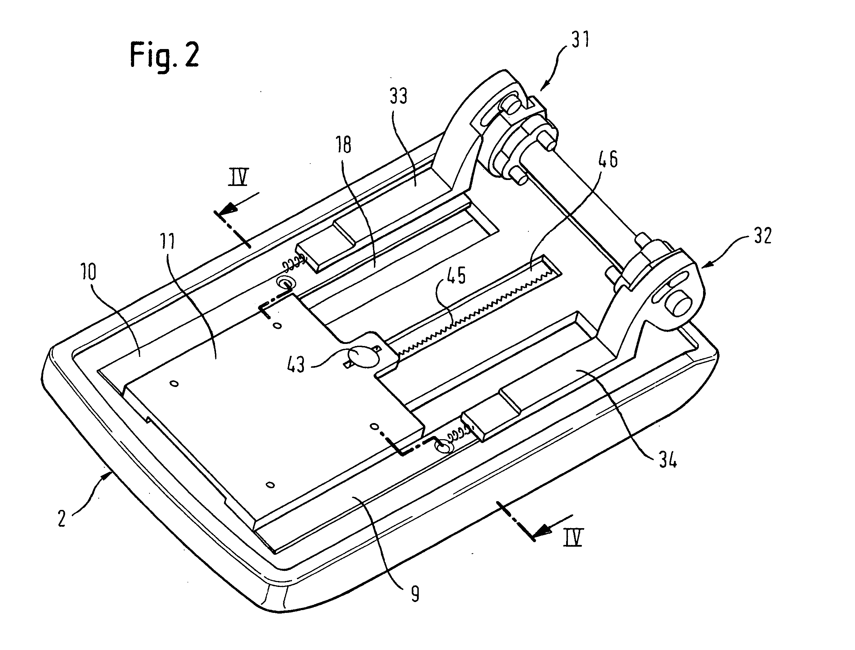

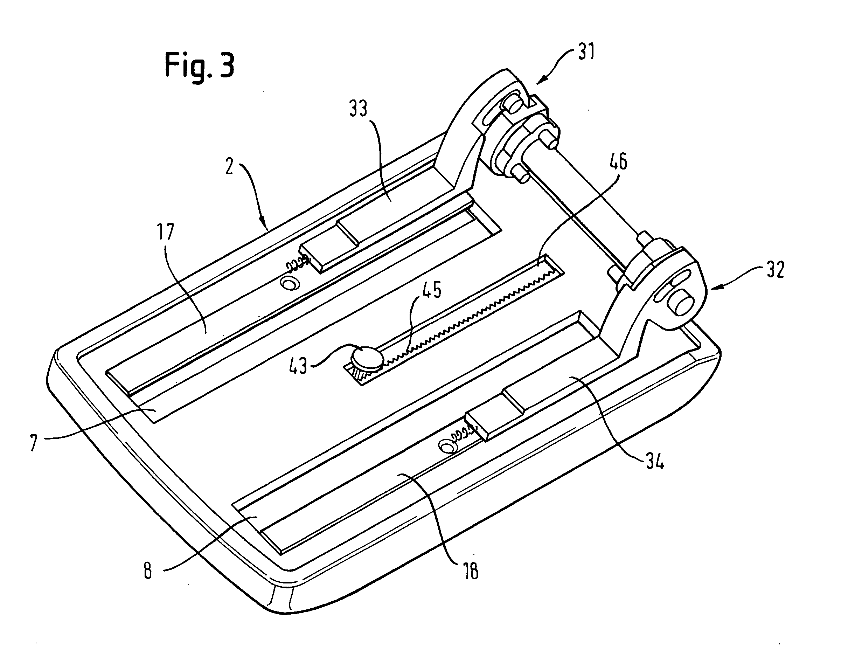

Das Trägerteil 3 liegt seinerseits auf einem Träger 30 auf. Gegenüber dem Träger 30 ist es über Scharniere 31, 32 (Fig. 1) schwenkbar. An den Scharnieren 31, 32 sind jeweils Scharnierbügel 33, 34 (Fig. 2, 3) befestigt, die ihrerseits mit dem Trägerteil 3 fest verbunden sind.

Das Innenteil 5 hat zwei Kanäle 7, 8, die sich in Längsrichtung erstrecken. Die Kanäle 7, 8 nehmen jeweils eine Führungslippe 9, 10 auf, die in den Kanälen 7, 8 eingeschraubt oder eingeklebt sind. Die Führungslippen 9, 10 haben jeweils einen L-förmigen Querschnitt mit nach innen weisenden Schenkeln 130 bzw. 140.

Das Trägerteil 3 trägt einen Schiebeschlitten 11, der über Schrauben 12 mit dem Trägerteil 3 fest verbunden ist.

Der Schiebeschlitten 11 weist seitliche Auskragungen 13, 14 auf, die in den Bereich zwischen den Führungslippen 9, 10 und den Boden der Kanäle 7, 8 hineinragen.

Auf der den Kanälen 7, 8 zugewandten Seite des Schiebeschlittens 11 sind schmale Streifen 15, 16 aus einem Material mit hoher Haftreibung angebracht.

Ebenso sind auch auf dem Boden der Kanäle 7, 8 jeweils Streifen 17, 18 angebracht, die mit den Streifen 15, 16 haftend zusammenwirken, wenn die Abdekkung 2 gegen das Trägerteil 3 gedrückt wird. Die Streifen 15, 16; 17, 18 weisen zur Unterstützung des Anhaftens zwischen der Abdeckung 2 und dem Trägerteil zusätzlich eine Verzahnung oder eine Riffelung auf.

Der Schiebeschlitten 11 weist auf seiner dem Innenteil 5 zugewandten Seite im Bereich der Kanäle 7, 8 Bohrungen 40 zur Aufnahme von elastischen Elementen auf, die die Abdeckung 2 punktuell nach oben drücken. Die elastischen Elemente sind vorzugsweise wendelförmige Druckfedern 41, die auf ihrer der Abdeckung 2 zugewandten Seite jeweils von einer halbkugelförmigen oder zylindrischen Kappe 42 abgedeckt sind. Die Kappe 42 verringert die Reibung, die beim Gleiten der Abdeckung 2 über den Schiebeschlitten 11 entsteht. Außerdem verhindert sie ein Beschädigen der Druckfedern 41 oder der Oberfläche in den Kanälen 7, 8.

Um eine nur langsame Verschiebung zwischen der Abdeckung 2 und dem Trägerteil 3 zuzulassen ist zwischen beiden eine Bremse 43, vorzugsweise eine Silikonbremse, angebracht, die von dem Schiebeschlitten 11 aufgenommen wird. Die Bremse 43 weist einen Zahnkranz 44 auf, der mit einer Längsverzahnung 45 zusammenwirkt. Die Längsverzahnung 45 wird von einem Kanal 46 in der Abdekkung 2 aufgenommen.

Durch die Erfindung wird somit ein Deckel 1 mit einer Abdeckung 2 und einem Trägerteil 3 geschaffen, die in einer ersten Raumrichtung gegen einander verschiebbar sind und in den anderen Raumrichtungen formschlüssig mit einander verbunden sind, wobei das Trägerteil 3 und die Abdeckung 2 durch eine in Richtung einer der beiden anderen Raumrichtungen wirkende Kraft in wenigstens einer Verschiebeposition zu einander festsetzbar sind.

## Patentansprüche

1. Auf einem Träger (30) abgestützter Deckel (1), insbesondere schwenkbar auf dem Träger (30) gelagerter Deckel (1), **gekennzeichnet durch** ein Trägerteil (3) und eine Abdeckung (2), die in einer ersten Raumrichtung gegen einander verschiebbar sind und in den anderen Raumrichtungen formschlüssig mit einander verbunden sind, wobei das Trägerteil (3) und die Abdeckung (2) **durch** eine in Richtung einer der beiden anderen Raumrichtungen wirkende Kraft in wenigstens einer Verschiebeposition zu einander festsetzbar sind.

2. Deckel (1) nach Anspruch 1, **dadurch gekennzeichnet, dass** das Trägerteil (3) und die Abdeckung (2) in jeder Verschiebeposition zu einander festsetzbar sind.

3. Deckel (1) nach Anspruch 1 oder 2, **dadurch gekennzeichnet, dass** das Trägerteil und der Deckel (1) in einem unbelasteten Zustand durch ein mit dem Trägerteil (3) oder mit der Abdeckung (2) verbundenes elastisches Element von einander abgehoben sind und im belasteten Zustand durch Zusammendrücken des elastischen Elements gegen einander gedrückt sind.

4. Deckel (1) nach einem der Ansprüche 1 bis 3, **dadurch gekennzeichnet, dass** das elastische Element von Druckfedern (41) gebildet ist, die an einem auf dem Trägerteil (3) aufgebrachten Schiebeschlitten (11) angebracht sind.

5. Deckel (1) nach Anspruch 4, **dadurch gekennzeichnet, dass** der Schiebeschlitten Bohrungen (40) zur Aufnahme der Druckfedern (41) aufweist.

6. Deckel (1) nach Anspruch 4 oder 5, **dadurch gekennzeichnet, dass** die Druckfedern (41) auf ihrer mit der Abdeckung (2) zusammenwirkenden Seite jeweils von einer Kappe (42) abgedeckt sind.

7. Deckel (1) nach einem der Ansprüche 1 bis 6, **dadurch gekennzeichnet, dass** entweder an dem Trägerteil (3), insbesondere dem Schiebeschlitten (11), oder an der Abdeckung (2) oder sowohl an dem Trägerteil (3) als auch an der Abdeckung (2) ein eine hohe Haftreibung gegenüber einer benachbarten Oberfläche ausübender Streifen (15, 16; 17, 18), insbesondere ein Gummistreifen, vorhanden ist.

8. Deckel (1) nach Anspruch 7, **dadurch gekennzeichnet, dass** der Streifen (15, 16; 17, 18) eine Verzahnung oder eine Riffelung aufweist.

9. Deckel (1) nach Anspruch 8, **dadurch gekennzeichnet, dass** der gegenüberliegende Streifen (15, 16; 17, 18) oder die gegenüberliegende Oberfläche ebenfalls eine Verzahnung bzw. eine Riffelung aufweist.

10. Deckel (1) nach einem der Ansprüche 1 bis 9, **dadurch gekennzeichnet, dass** zwischen dem Trägerteil (3) und der Abdeckung (2) eine Bremse (43), insbesondere eine Silikonbremse, zur Verzögerung der Schiebebewegung eingebracht ist.

11. Deckel (1) nach Anspruch 10, **dadurch gekennzeichnet, dass** die Bremse (43) an dem Schiebeschlitten (11) befestigt ist und einen Zahnkranz (44) aufweist, der mit einer Längsverzahnung (45) in einem in der Abdeckung (2) angeordneten Kanal (46) kämmt.
